# EUROPÄISCHE PATENTSCHRIFT

(11) **EP 0 590 343 B1**
(45) Veröffentlichungstag und Bekanntmachung des Hinweises auf die Patenterteilung: **10.01.1996**
(21) Anmeldenummer: 93114103.0
(22) Anmeldetag: 02.09.1993
(51) Int. Cl.: H01S 3/03

(54) **Hochfrequenzangeregter Laser für hohe Eingangsleistungen, insbesondere CO2-Bandleiterlaser**
High power high frequency excited laser, in particular CO2 slab laser
Laser excité en haute fréquence à haute puissance en particulier laser à ruban à CO2

(30) Priorität: 30.09.1992 DE 4232840
(43) Veröffentlichungstag der Anmeldung: 06.04.1994
(73) Patentinhaber: CARL ZEISS JENA GmbH, D-07745 Jena (DE)
(72) Erfinder: Günther, Wolfgang, Dipl.-Ing., D-81735 München (DE)
(74) Vertreter: Muhsfeldt, Willi

(56) Entgegenhaltungen:
- EP-A- 0 243 592
- EP-A- 0 305 893
- EP-A- 0 520 249
- GB-A- 2 060 989
- REVIEW OF SCIENTIFIC INSTRUMENTS Bd. 55, Nr. 10, Oktober 1984, NEW YORK US Seiten 1539 - 1541 R.L.SINCLAIR ET AL. 'RADIO FREQUENCY EXCITED CO2 WAVEGUIDE LASER'

## Beschreibung

Die vorliegende Erfindung betrifft einen HF-angeregten Laser für hohe Eingangsleistungen, insbesondere einen CO₂-Bandleiterlaser nach dem Oberbegriff des Patentanspruchs 1. Ein derartiger Laser ist in der europäischen Anmeldung EP-A-0 477 879 beschrieben. Außerdem ist ein Bandleiterlaser aus der DE-OS 37 29 053 bekannt

Darüberhinaus offenbart EP-A- 0 243 592 einen hochfrequenzangeregten Laser mit zwei auf einem Entladungsrohr angeordneten Elektroden und einem in das metallische Lasergehaüse integrierten LC-Anpaßglied, das aus einem einstellbaren Kondensator und einer über die Länge einstellbaren Spule besteht.

Ein hochfrequenzangeregter Laser für hohe Eingangsleistungen, insbesondere CO₂-Bandleit erlaser, welcher ein Lasergehäuse und eine in das Lasergehäuse integrierte Anpaßeinheit zur Anpassung der Impedanz an die Impedanz einer Hochfrequenzeinspeisung enthält, **dadurch gekennzeichnet**, daß die Anpaßeinheit ein L-C-Glied enthält, welches als Resonanztransformator wirkt, daß die Induktivität L und Kapazität C variabel sind, daß die Induktivität durch eine Veränderung der Länge der galvanisch leitenden Teile zwischen einer Hochfrequenzzuleitung und einer Hochfrequenzableitung eines Hochfrequenzanschlusses eingestellt ist, daß der Kondensator durch einen Außenleiter und einen zu diesem koaxialen Innenleiter aufgebaut ist und daß mit dem Außenleiter ein koaxialer, in axialer Richtung von außen bewegbarer Gleitring in Verbindung steht, welcher an ein Dielektrikum zwischen dem Außenleiter und dem Innenleiter angrenzt, daß der Innenleiter einen Kondensatorelektrodenzylinder mit vergrößertem Durchmesser besitzt und daß der Außenleiter den Innenleiter trägt, ist Gegenstand der Patentanmeldung EP-A- 0 520 429, die Stand der Technik nach Artikel 54(3) EPÜ bildet.

Eine Anpaßeinheit dient bei hochfrequenzangeregten Lasern höherer Leistung, z.B. bei einer Eingangsleistung von mindestens einem kW, zur Transformation der Impedanz der das Plasma anregenden Elektronen auf die Ausgangsimpedanz des Generators, die in der Regel 50 Ohm beträgt, bei einer vorgegebenen Frequenz. Gemäß weiteren bekannten Lösungen wurden zwei Kurzschlußleitungen im λ/4 Abstand in die Eingangsleitung geschaltet oder ein π-Glied mit fester Längsinduktivität und zwei variablen Querkapazitäten eingesetzt. Die Kurzschlußleitungen bedingen jedoch hohe Ströme und hohe Spannungen auf den 50-Ohm-Leitungen, während das π-Glied großvolumig aufgebaut werden muß.

Demgegenüber besteht die Aufgabe, die der vorliegenden Erfindung zugrundeliegt, in einem kompakten Aufbau eines Anpaßgliedes und gleichzeitig einer Minimierung der Strombelastung.

Diese Aufgabe wird bei einem Laser der einganggenannten Art dadurch gelöst, daß die Anpaßeinheit ein L-C-Glied enthält, welches als Resonanztransformator wirkt, daß die Induktivität L variabel ist und durch eine Veränderung der Länge der galvanisch leitenden Teile zwischen einer Hochfrequenzzuleitung und einer Hochfrequenzableitung eines Hochfrequenzanschlusses eingestellt ist, daß der Kondensator durch eine Außenleiter und einen zu diesem teilweise koaxialen Innenleiter der Hochfrequenzzuleitung aufgebaut ist, daß der Innenleiter eine konzentrische, eine erste Elektrodenplatte des Kondensators bildende Kondensatorscheibe trägt und isoliert durch eine Stirnplatte des Außenleiters, die eine zweite Elektrodenplatte des kreisringförmig gestalteten Kondensators bildet, hindurchgeführt ist, wobei die beiden Elektrodenplatten an einem Dielektrikum anliegen.

Das L-C-Glied wirkt hier bei der vorgegebenen Frequenz als Resonanztransformator. Der spezielle Aufbau gewährleistet einen hochfrequenzdichten Abschluß des Lasers und einen hochfrequenzdichten Anschluß an ein Hochfrequenzkabel.

Vorteilhaft ist die Kapazität des Kondensators durch den Durchmesser der Kondensatorscheibe, die Dicke des Dielektrikums und durch seine Dielektrizitätskonstante bestimmt.

Eine optimale Raumausnutzung des vorhandenen Lasergehäuses und eine mechanisch einfache Konstruktion ist ermöglicht, indem die Kondensatorscheibe über einen elektrisch isolierenden Druckring gegen die Stirnplatte gepreßt ist und indem die Anpaßeinheit koaxial zum Lasergehäuse und gegenüber diesem in axialer Richtung verschiebbar gestaltet ist, der Innenleiter hinter der Stirnplatte ein in axialer Richtung bewegliches oder verformbares Bindeglied enthält und bei dem die axiale Lage des Außenleiters gegenüber dem Lasergehäuse die eingestellte Induktivität bestimmt. Die Anpaßeinheit kann jedoch auch einen unverschiebbaren Teil des Lasergehäuses bilden, insbesondere kann die Stirnplatte mit Steckeranschluß die Stirnwand des Lasergehäuses bilden, wobei dann durch die in axialer Richtung variierbare Länge des Außenleiters gegenüber dem Lasergehäuse die eingestellte Induktivität bestimmt ist. Dabei umschließt vorteilhaft der Außenleiter den Innenleiter bis zu einem Steckeranschluß für einen Koaxialstecker hin vollständig und grenzt an die Gehäusewand hochfrenquenzdicht an. So ist auf einfache Weise der Laser hochfrequenzdicht mit einem Anschlußkabel zu verbinden.

Die Erfindung wird nun anhand zweier Figuren mit erfindungsgemäßen Ausführungsformen näher erläutert. Sie ist nicht auf die in den Figuren gezeigten Beispiele beschränkt.

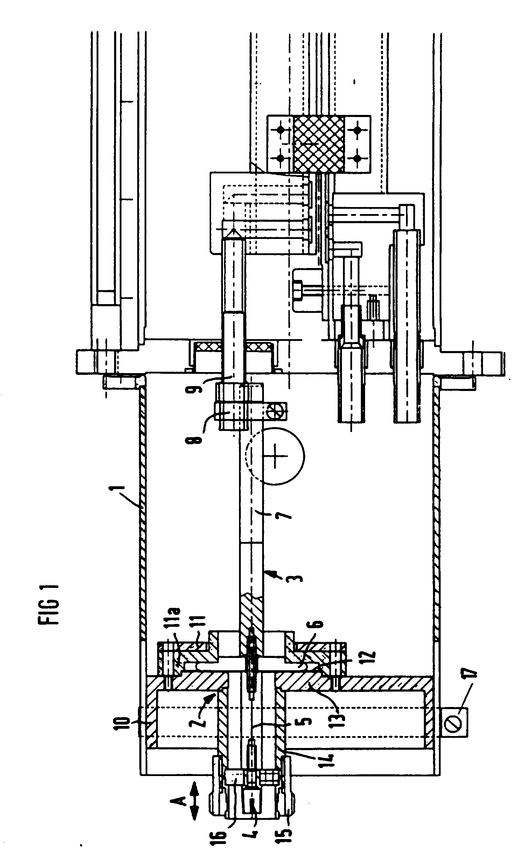

In FIG 1 ist in einem Lasergehäuse 1 eine Anpaßeinheit 2 untergebracht. Die Anpaßeinheit 2 besteht aus einem L-C-Glied, wobei eine Induktivität durch die gesamte Länge der HF-Zu- und -Ableitung zum und vom im rechten Teil der Zeichnung angedeuteten Gasentladungsraum gebildet ist. Die HF-Zuleitung ist als Innenleiter 3 ausgebildet, welcher sich aus einem Steckerinnenkontakt 4, einem Bolzen 5, einer Kondensatorscheibe 6 und einem in seiner elektrisch wirksamen Länge variablen Innenleiter 7 zusammensetzt und über ein Bindeglied 8 mit einem Laserelektrodenanschluß 9 in Verbindung steht und gegenüber diesem in axialer Richtung verschiebbar ist.

Die Stirnseite der Kondensatorscheibe 6 ist mit dem variablen Innenleiter 7 verbunden und durch ein Dielektrikum 12, vorzugsweise Teflon oder Polyimid gegenüber einer Stirnplatte 13 des Außenleiters 10 isoliert und wird mittels Schrauben über einen Druckring 11 und ein Isolierstück 11a gegen diese Stirnplatte 13 gedrückt. Die Anpaßeinheit 2 ist gegenüber dem Lasergehäuse 1 in axialer Richtung verschiebbar ausgebildet und bildet zum Lasergehäuse 1 einen hochfrequenzdichten Abschluß.

Die Stirnplatte 13 ist mit dem Außenrohr 14 verbunden. Das Außenrohr 14 ist in seinem Endbereich mit dem Außenkontaktring 15 verbunden und über eine Isolierscheibe 16 gegen den Innenleiter 3 abgestützt. Der Außenkontaktring 15 dient zur Kontaktgabe gegenüber einem Außenkontakt eines nicht dargestellten Koaxialsteckers, dessen abgeschirmter Kontakt den Steckerinnenkontakt 4 des Innenleiters 3 kontaktiert. Nach dem Abgleich der Induktivität durch Verschieben der gesamten Anpaßeinheit 2 in Pfeilrichtung A kann diese mittels eines Spannbandes 17 bzw. einer Schelbe gegenüber dem Lasergehäuse 1 fixiert werden.

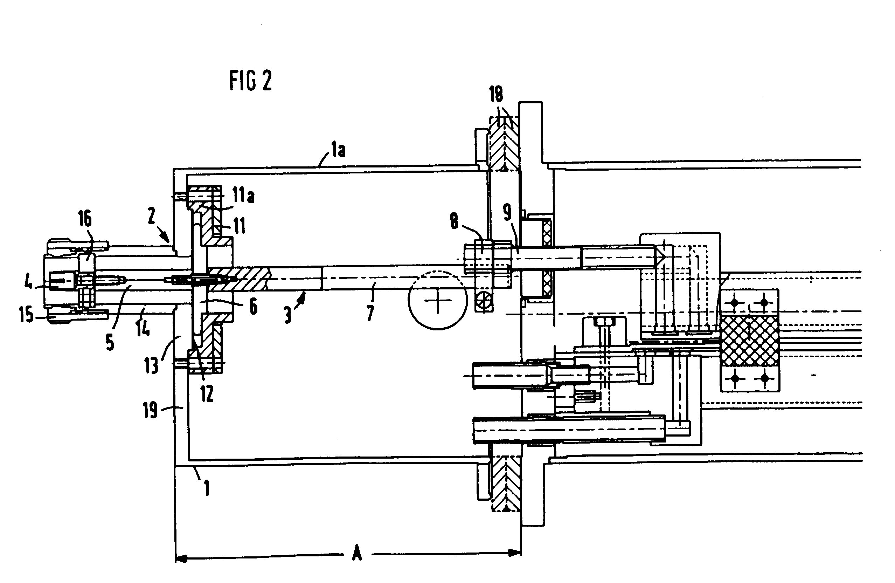

In FIG 2 haben gleiche Bezugszeichen die gleiche Bedeutung wie in FIG 1. Der Außenleiter, der hier teilweise durch das Laserrohr 1a gebildet ist, ist in seiner Länge durch Beilegen von Zwischenringen 18 variabel. Die Stirnplatte 13 bildet einen festen, integralen Bestandteil der Stirnwand 19 des Lasergehäuses 1.

## Patentansprüche

1. Hochfrequenzangeregter Laser für hohe Eingangsleistungen, insbesondere CO₂-Bandleiterlaser, welcher ein Lasergehäuse (1) und eine in das Lasergehäuse integrierte Anpaßeinheit (2) zur Anpassung der Impedanz an die Impedanz einer Hochfrequenzeinspeisung enthält,
**dadurch gekennzeichnet,**
daß die Anpaßeinheit (2) ein L-C-Glied enthält, welches als Resonanztransformator wirkt, daß die Induktivität L variabel ist und durch eine Veränderung der Länge der galvanisch leitenden Teile (4-7) zwischen einer Hochfrequenzzuleitung und einer Hochfrequenzableitung eines Hochfrequenzanschlusses (9) eingestellt ist, daß der Kondensator durch einen Außenleiter (10, 1a) und einen zu diesem teilweise koaxialen Innenleiter (3) der Hochfrequenzzuleitung aufgebaut ist, daß der Innenleiter (3) eine konzentrische, eine erste Elektrodenplatte des Kondensators bildende Kondensatorscheibe (6) trägt und isoliert durch eine Stirnplatte (13) des Außenleiters (10, 1a), die eine zweite Elektrodenplatte des kreisringförmig gestalteten Kondensators bildet, hindurchgeführt ist, wobei die beiden Elektrodenplatten an einem Dielektrikum (12) anliegen.

2. Laser nach Anspruch 1, bei dem die Kapazität des Kondensators durch den Durchmesser der Kondensatorscheibe (6), die Dicke des Dielektrikums (12) und durch seine Dielektrizitätskonstante bestimmt ist.

3. Laser nach Anspruch 1 oder 2, bei dem die Kondensatorscheibe (6) über einen elektrisch isolierenden Druckring (11) gegen die Stirnplatte (13) gepreßt ist.

4. Laser nach einem der Ansprüche 1 bis 3, bei dem die Anpaßeinheit (2) koaxial zum Lasergehäuse (1) und gegenüber diesem in axialer Richtung verschiebbar gestaltet ist, der Innenleiter (3) hinter der Stirnplatte (13) ein in axialer Richtung bewegliches oder verformbares Bindeglied (8) enthält und bei dem die axiale Lage des Außenleiters (10) gegenüber dem Lasergehäuse (1) die eingestellte Induktivität bestimmt.

5. Laser nach einem der Ansprüche 1 bis 3, bei dem die Anpaßeinheit (2) einen unverschiebbaren Teil des Lasergehäuses (1) bildet, bei dem insbesondere die Stirnplatte (13) des Außenleiters eine Stirnwand (19) des Lasergehäuses (1) bildet, und bei dem durch die in axialer Richtung variierbare Länge des Außenleiters gegenüber dem Lasergehäuse die eingestellte Induktivität bestimmt ist.

6. Laser nach einem der Ansprüche 1 bis 5, bei dem der Außenleiter (10, 14, 15) den Innenleiter (3) bis zu einem Steckeranschluß (4) für einen Koaxialstecker hin vollständig umhüllt und HF-dicht abschirmt und auch an das Lasergehäuse (1) HF-dicht angrenzt.

## Claims

1. High-frequency-excited laser for high input powers, preferably a CO₂ stripline laser, which comprises a laser housing (1) and a matching unit (2), integrated into the laser housing, for matching the impedance to the impedance of a high-frequency feed, characterized in that the matching unit (2) comprises an L-C element which acts as a resonance transformer, in that the inductance L is variable and is set by varying the length of the electrically conductive parts (4-7) between a high-frequency feed and a high-frequency tap of a high-frequency terminal (9), in that the capacitor is built up by an outer conductor (10, 1a) and an inner conductor (3), partially coaxial with said outer conductor, of the high-frequency feed, and in that the inner conductor (3) carries a concentric capacitor plate (6), forming a first electrode plate of the capacitor, and is guided in an insulated fashion through a face plate (13) of the outer conductor (10, 1a), which face plate forms a second electrode plate of the capacitor, said capacitor having an annular configuration, the two electrode plates bearing against a dielectric (12).

2. Laser according to Claim 1, in which the capacitance of the capacitor is determined by the diameter of the capacitor plate (6), the thickness of the dielectric (12) and by the dielectric constant of the latter.

3. Laser according to Claim 1 or 2, in which the capacitor plate (6) is pressed against the face plate (13) via an electrically insulating thrust ring (11).

4. Laser according to one of Claims 1 to 3, in which the matching unit (2) is configured coaxially with the laser housing (1) and capable of being displaced relative thereto in an axial direction, the inner conductor (3) containing behind the face plate (13) a link (8) which can be moved or deformed in an axial direction, and in which the axial position of the outer conductor (10) relative to the laser housing (1) defines the set inductance.

5. Laser according to one of Claims 1 to 3, in which the matching unit (2) forms a non-displaceable part of the laser housing (1), in which the face plate (13) of the outer conductor preferably forms an end wall (19) of the laser housing (1), and in which the set inductance is defined by the length of the outer conductor, which can be varied in an axial direction with respect to the laser housing.

6. Laser according to one of Claims 1 to 5, in which the outer conductor (10, 14, 15) completely envelopes the inner conductor (3) up to a plug terminal (4) for a coaxial plug and screens it in an HF-tight fashion and also adjoins the laser housing (1) in an HF-tight fashion.

## Revendications

1. Laser excité en haute fréquence pour de grandes puissances d'entrée, notamment laser à ruban à CO₂, qui comporte un boîtier (1) de laser et une unité d'adaptation (2), qui est intégrée au boîtier de laser et sert à adapter l'impédance à l'impédance d'une alimentation à haute fréquence,
caractérisé par le fait
que l'unité d'adaptation (2) contient un circuit L-C, qui agit en tant que transformateur à résonance, que l'inductance L est variable et est réglée au moyen d'une modification de la longueur des éléments galvaniquement conducteurs (4 à 7) entre une ligne d'arrivée à haute fréquence et une ligne de départ à haute fréquence d'une borne à haute fréquence (9), que le condensateur est formé par le conducteur extérieur (10,1a) et par un conducteur intérieur (3), au moins partiellement coaxial à ce conducteur extérieur, de la ligne d'arrivée à haute fréquence, que le conducteur intérieur (3) porte un disque concentrique de condensateur (6), qui forme une première plaque d'électrode du condensateur, et traverse d'une manière isolée une plaque frontale (13) du conducteur extérieur (10,1a), qui forme une seconde plaque d'électrode du condensateur de forme annulaire, les deux plaques d'électrodes s'appliquant à un diélectrique (12).

2. Laser suivant la revendication 1, dans lequel la capacité du condensateur est déterminée par le diamètre du disque de condensateur (6), par l'épaisseur du diélectrique (12) et par sa constante diélectrique.

3. Laser suivant la revendication 1 ou 2, dans lequel le disque de condensateur (6) est repoussé contre la plaque frontale (13) par l'intermédiaire d'une bague de pression électriquement isolante (11) .

4. Laser suivant l'une des revendications 1 à 3, dans lequel l'unité d'adaptation (2) est coaxiale au boîtier (1) de laser et coulissante par rapport à ce dernier dans la direction axiale, que le conducteur intérieur (3) comporte, derrière la plaque frontale (13), un organe de liaison (8) mobile dans la direction axiale ou déformable, et dans lequel la position axiale du conducteur extérieur (10) par rapport au boîtier (1) de laser détermine l'inductance réglée.

5. Laser suivant l'une des revendications 1 à 3, dans lequel l'unité d'adaptation (2) forme une partie non coulissante du boîtier (1) de laser, et dans lequel notamment la plaque frontale (13) du conducteur extérieur forme une paroi frontale (19) du boîtier (1) de laser, et dans lequel l'inductance réglée est déterminée par la longueur, qui peut être modifiée dans la direction axiale, du conducteur extérieur par rapport au boîtier de laser.

6. Laser suivant l'une des revendications 1 à 5, dans lequel le conducteur extérieur (10,14,15) enveloppe complètement le conducteur intérieur (3) jusqu'à une borne d'enfichage (4) sur un connecteur coaxial et le protège d'une manière étanche vis-à-vis des hautes fréquences et est également contigu, d'une manière étanche aux hautes fréquences, au boîtier (1) de laser.
